# EUROPEAN PATENT SPECIFICATION

(11) **EP 1 473 811 B1**
(45) Date of publication and mention of the grant of the patent: **09.02.2011**
(21) Application number: 04076134.8
(22) Date of filing: 09.04.2004
(51) Int. Cl.: H02B 1/06

(54) **Cover for electric switchboard**
Abdeckung für einen elektrischen Verteiler
Couvercle pour tableau de distribution électrique

(30) Priority: 30.04.2003 IT rm20030207
(43) Date of publication of application: 03.11.2004
(73) Proprietor: BTICINO S.P.A., 20154 Milano (IT)
(72) Inventor: Passera, Constantino, 20094 Corsico (Milano) (IT)
(74) Representative: Carangelo, Pierluigi

(56) References cited:
- DE-A- 19 636 915

## Description

The present invention relates to electric switchboards and, more particularly, to a cover for closing an opening in a wall of an electric switchboard.

Electric switchboards are generally constituted by a metallic framework, made of uprights and crosspieces, and walls formed by panels of sheet metal or plastic material fixed to the framework. Electric equipment is mounted inside the electric instrument panel on appropriate supporting bars and can be accessed through openings in the walls for mounting and making the electric connections. The openings are generally closed with the help of covers that are fixed to the walls or directly to the framework of the electric switchboard by means of screws, cogging or other fixing means. Sometimes the fixing means comprise locks and/or seals to ensure that access to the electric switchboard for installation, connection and maintenance of the electric equipment will be limited to authorized personnel.

The known covers are generally constituted by simple panels that, especially when they are of large size, are difficult to position in the mounting phase of the panel and to remove in the maintenance phase.

Document DE 196 36915 discloses such a prior art cover.

The principal aim of the present invention is to propose a cover that can be mounted and dismantled with great ease.

Another object is to propose a cover with an easily sealable lock.

According to the invention, these aims are attained by realizing the cover defined in general terms in Claim 1 hereinbelow and of which some particular embodiments are described in the dependent claims. More particularly, the cover in accordance with the invention is provided with two gripping elements, each of which comprises a clasp plate firmly attached to the cover and recesses along at least two opposite edges of each clasp plate.

Advantageously, moreover, the lock comprises a rotatable body that passes through the cover and one respective clasp plate.

The invention will be more readily understood from the following detailed description of a particular embodiment thereof, which is given purely by way of example and is not to be considered limitative in any way, the description making reference to the attached drawings, of which
- Figure 1 shows a perspective view of the cover in accordance with the invention,
- Figures 2A to 2D show an enlarged detail of the cover in accordance with the invention as seen, respectively, from in front, from below, from behind and from the side, and
- Figure 3 shows a perspective of the same detail with the various parts detached from each other.

In the embodiment of the invention illustrated by the figures the cover is substantially constituted by a rigid panel 10 of rectangular shape with bent edges and of such size as to close a corresponding opening in an electric switchboard (not shown). It can be obtained, for example, by means of moulding as a single piece of plastic material. In this embodiment the panel 10 is provided with a longitudinal window 11 that permits the passage of parts of electrical equipment (not shown) mounted within the switchboard, for example, parts of switches from which there project the operating levers.

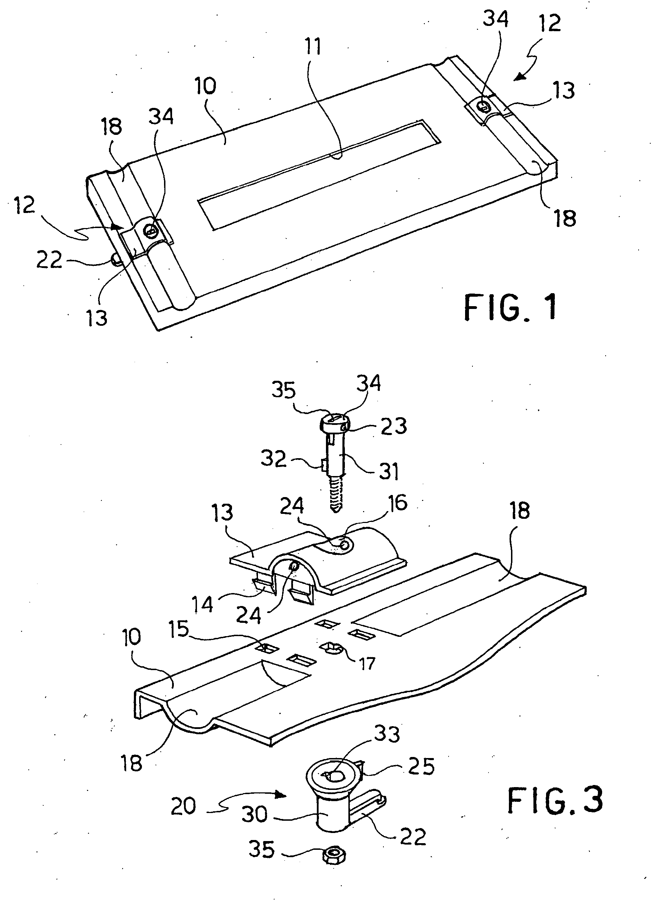

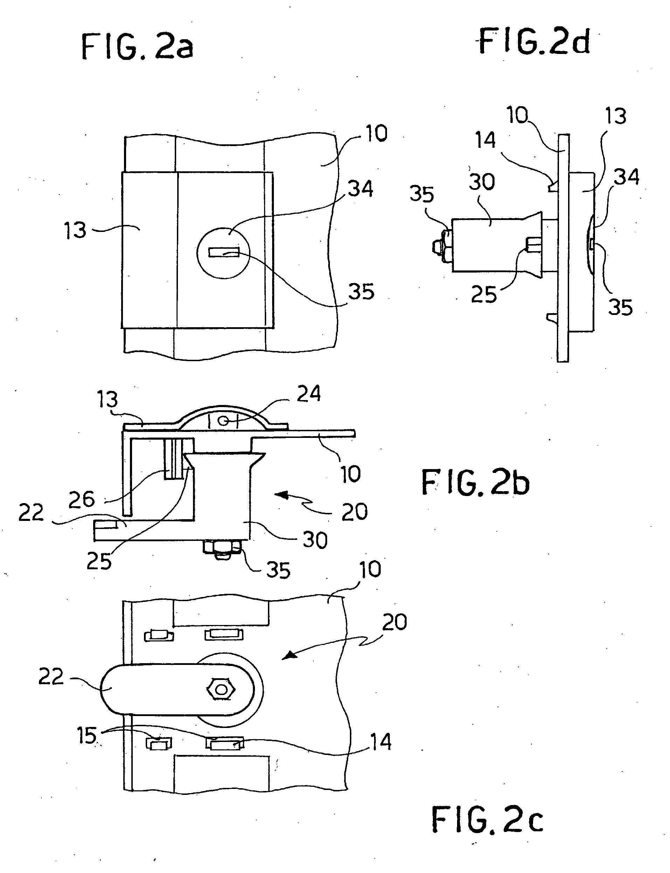

The cover is provided with two grips, indicated overall by the reference number 12, arranged centrally near the two opposite shorter sides of the panel 10. Each grip 12 comprises a clasp plate 13 firmly attached to the panel 10, for example, fixed to it by means of four spring clips 14 (Figures 2C, 2D and 3) that can be inserted by means of a snap fit into corresponding slots 15. Each clasp plate 13 has a cylindrical part that stands out above the external surface of the panel, said cylindrical part having a longitudinal axis that extends parallel to the shorter sides and a cavity 16 (Figure 3) with a hole at the bottom that, when the clasp plate is fixed in position, is aligned with a hole 17 in the panel. The clasp plates 13 may be made of metal or rigid plastic material. The panel 10 is shaped in such a way as to have recesses 18 along at least two opposite edges of each clasp plate 13. In this example the recesses associated with each clasp plate have cylindrical surfaces coaxial with the upstanding cylindrical part of the respective clasp plate and extending from one to the other of the longer sides of the panel 10.

In combination with the respective recesses 18, the two clasp plates 13 constitute two grips that make it possible for the cover to be handled with great ease and precision during its positioning and its removal.

With at least one of the grip elements, in this embodiment with both, there is associated a lock 20. Each lock has a turnable body, consisting substantially of a collar 30 and a pin 31, that is axially constrained to the panel 10 of the cover and has an arm 22 that extends at right angles to the axis of the body. When the turnable body is made to rotate about its axis, for example with a key or a screwdriver, the arm can become engaged like a locking bolt in a corresponding seating provided on the wall (not shown) or on the framework of the switchboard in proximity of one side of the opening that has to be closed by the panel.

The pin 31 is provided with a through hole 23 at right angles to its axis of rotation and, correspondingly, the clasp plate 13 associated with it is provided with two through holes 24 that are coaxial with each other. When the lock is in its locked position, the hole 23 of the pin 31 and the holes 24 of the clasp plate are aligned with each other. A wire (not shown) may therefore be passed through the holes 23 and 24 and have its ends joined together by a lead seal or an appropriate padlock may be passed through the holes 23 and 24.

The collar 30 is also provided with a stop tooth 25 that is arranged in position such as to enable it to become engaged by means of snap fit with a small column 26 projecting from the internal surface of the panel when the lock is in its locking position. In this way it is easy to recognize the position in which the holes are aligned with each other. The small column 26 may constitute a single piece with the panel 10, as is the case in the embodiment illustrated by the drawings, or may constitute a single piece with the clasp plate 13: in that case an opening has to be provided in the panel 10 in order to permit the passage of the column 26.

Some constructional details of a clasp plate-lock unit are shown in Figure 3. As can be seen, the collar 30 of the turnable body is formed as a single piece with the locking bolt 22, for example as a moulding made of rigid plastic material. The pin 31 is provided with a tooth 32 capable of becoming inserted in a corresponding seating 33 provided in the collar 30, has a head 34 with a slot 35 for the insertion of an operating tool, a screwdriver for example, is crossed by the previously described transverse hole 23 and has a threaded end.

As far as assembly is concerned, the clasp plate 13 is fixed to the panel 10 by making the spring clips 14 snap into the corresponding slots 15 of the panel, the pin 31 is made to pass through the hole at the bottom of the cavity 16 of the clasp plate and through the underlying hole 17 in the panel 10. The collar 30 is slipped over the pin 31 in such a manner as to make the tooth 32 of the pin fit into the internal seating 33 of the collar 30 and, lastly, a nut 35 is screwed onto the threaded part of the pin 31.

As is brought out by the above description, the cover in accordance with the invention can be easily handled, because each clasp plate with the associated recesses permits it to be securely held between the thumb and the forefinger of one hand; furthermore, the closure of the cover can be efficaciously protected thanks to the fact that the lock associated with the clasp plate is predisposed for being sealed.

Although only a single embodiment of the invention has here been described and illustrated, it is clear to a person skilled in the art that numerous modifications are possible without overstepping the underlying inventive concept. For example, only a single lock may be provided and associated with one of the clasp plates: in that case appropriate jointing means will be provided to perform the function of the second lock.

## Claims

1. An electric switchboard cover for closing an opening in a wall of an electric switchboard comprising a panel (10) and fixing means with lock
**characterized in that** it is provided with two grip elements (13, 18) each comprising a clasp plate (13) firmly attached to the panel and recesses (18) along at least two opposite edges of each clasp plate, allowing the cover to be securely held between the thumb and the forefinger of one hand.

2. A cover in accordance with Claim 1, wherein the lock comprises a rotatable body (30, 31) passing through the panel and through a respective clasp plate.

3. A cover in accordance with Claim 2, wherein the rotatable body (30, 31) is provided with a through hole (23) at right angles to its axis of rotation and the clasp plate (13) is provided with two through holes (24) that are coaxial with each other and, when the lock is in its locking position, are coaxial with the through hole (23) of the rotatable body (30, 31) of the lock.

4. A cover in accordance with Claim 2 or Claim 3, wherein the rotatable body is provided with a stop tooth (25) and wherein there is provided an element (26) projecting from the internal surface of the panel (10) with which the stop tooth (25) becomes engaged by means of a snap fit when the lock is in its locking position.

5. A cover in accordance with Claim 4, wherein the projecting element (26) forms a single piece with the panel (10).

6. A cover in accordance with Claim 4, wherein the projecting element (26) forms a single piece with the respective clasp plate (13) and the panel (10) is provided with an opening for the passage of the projecting element (26).

7. A cover in accordance with any one of the preceding claims, wherein the clasp plates (13) are provided with respective parts that stand up above the external surface of the panel.

8. A cover in accordance with Claim 7, wherein the rotatable body (30, 31) of the lock passes through the upstand part of the respective clasp plate.

9. A cover in accordance with Claim 7 or Claim 8, wherein the panel has two opposite sides parallel and the upstand parts of the clasp plates (13) have cylindrical surfaces of which the axes extend parallel to the parallel opposite sides of the panel.

10. A cover in accordance with Claim 9, wherein the recesses (18) have cylindrical surfaces coaxial with the cylindrical surfaces of the upstand parts of the clasp plates (13).

11. A cover in accordance with any one of the preceding claims, wherein the two grip elements (13, 18) are arranged in proximity of two opposite sides of the cover.

12. A cover in accordance with any one of the preceding claims, wherein the means for fixing the cover comprise two locks.

## Patentansprüche

1. Eine Abdeckung für eine elektrische Schalttafel zum Schließen einer Öffnung in einer Wand einer elektrischen Schalttafel, die eine Blende (10) und eine Fixierungseinrichtung mit einer Sperre aufweist,
**dadurch gekennzeichnet, dass** dieselbe mit zwei Griffelementen (13, 18) versehen ist, die jeweils eine Klammerplatte (13),die fest an der Blende angebracht ist, und Ausnehmungen (18) entlang zumindest zweier gegenüberliegender Ränder jeder Klammerplatte aufweisen, was es ermöglicht, dass die Abdeckung sicher zwischen dem Daumen und dem Zeigefinger einer Hand gehalten wird.

2. Eine Abdeckung gemäß Anspruch 1, bei der die Sperre einen drehbaren Körper (30, 31) aufweist, der durch die Blende und durch eine jeweilige Klammerplatte verläuft.

3. Eine Abdeckung gemäß Anspruch 2, bei der der drehbare Körper (30, 31) mit einem Durchgangsloch (23) in rechten Winkeln zu seiner Rotationsachse versehen ist und die Klammerplatte (13) mit zwei Durchgangslöchern (24) versehen ist, die koaxial zueinander sind und, wenn die Sperre in ihrer Sperrposition ist, koaxial zu dem Durchgangsloch (23) des drehbaren Körpers (30, 31) der Sperre sind.

4. Eine Abdeckung gemäß Anspruch 2 oder Anspruch 3, bei der der drehbare Körper mit einem Anschlagszahn (25) versehen ist, und bei der ein Element (26) vorgesehen ist, das von der inneren Oberfläche der Blende (10) vorsteht und mit dem der Anschlagszahn (25) mittels einer Einschnapppassung in Eingriff genommen wird, wenn die Sperre in ihrer Sperrposition ist.

5. Eine Abdeckung gemäß Anspruch 4, bei der das vorstehende Element (26) mit der Blende (10) zusammen ein einzelnes Stück bildet.

6. Eine Abdeckung gemäß Anspruch 4, bei der das vorstehende Element (26) mit der jeweiligen Klammerplatte (13) zusammen ein einzelnes Stück bildet und die Blende (10) mit einer Öffnung für den Durchgang des vorstehenden Elements (26) versehen ist.

7. Eine Abdeckung gemäß einem der vorhergehenden Ansprüche, bei der die Klammerplatten (13) mit jeweiligen Teilen versehen sind, die über die äußere Oberfläche der Blende hochstehen.

8. Eine Abdeckung gemäß Anspruch 7, bei der der drehbare Körper (30, 31) der Sperre durch den hochstehenden Teil der jeweiligen Klammerplatte verläuft.

9. Eine Abdeckung gemäß Anspruch 7 oder Anspruch 8, bei der die Blende zwei gegenüberliegende parallele Seiten aufweist und die hochstehenden Teile der Klammerplatten (13) zylindrische Oberflächen aufweisen, deren Achsen sich parallel zu den parallelen gegenüberliegenden Seiten der Blende erstrecken.

10. Eine Abdeckung gemäß Anspruch 9, bei der die Ausnehmungen (18) zylindrische Oberflächen aufweisen, die koaxial zu den zylindrischen Oberflächen der hochstehenden Teile der Klammerplatten (13) sind.

11. Eine Abdeckung gemäß einem der vorhergehenden Ansprüche, bei der die beiden Griffelemente (13, 18) in der Nähe zweier gegenüberliegender Seiten der Abdeckung angeordnet sind.

12. Eine Abdeckung gemäß einem der vorhergehenden Ansprüche, bei der die Einrichtung zum Fixieren der Abdeckung zwei Sperren aufweist.

## Revendications

1. Couvercle pour tableau de distribution électrique destiné à fermer une ouverture dans une paroi d'un tableau de distribution électrique comprenant un panneau (10) et des moyens de fixation à verrou
**caractérisé en ce qu'**il est pourvu de deux éléments de préhension (13, 18) comprenant chacun une plaque à crochets (13) solidement fixée au panneau et des évidements (18) le long d'au moins deux bords opposés de chaque plaque à crochets, permettant au couvercle d'être tenu fermement entre le pouce et l'index d'une main.

2. Couvercle selon la revendication 1, dans lequel le verrou comprend un corps rotatif (30, 31) traversant le panneau ainsi qu'une plaque à crochets respective.

3. Couvercle selon la revendication 2, dans lequel le corps rotatif (30, 31) est doté d'un trou traversant (23) à angles droits avec son axe de rotation et la plaque à crochets (13) est pourvue de deux trous traversants (24) qui sont coaxiaux l'un à l'autre et, lorsque le verrou est dans sa position de verrouillage, sont coaxiaux au trou traversant (23) du corps rotatif (30, 31) du verrou.

4. Couvercle selon la revendication 2 ou la revendication 3, dans lequel le corps rotatif est pourvu d'une dent d'arrêt (25) et dans lequel est prévu un élément (26) faisant saillie depuis la surface interne du panneau (10) avec lequel la dent d'arrêt (25) s'engage au moyen d'un encliquetage lorsque le verrou est dans sa position de verrouillage.

5. Couvercle selon la revendication 4, dans lequel l'élément faisant saillie (26) est d'un seul tenant avec le panneau (10).

6. Couvercle selon la revendication 4, dans lequel l'élément faisant saillie (26) est d'un seul tenant avec la plaque à crochets (13) respective et le panneau (10) est doté d'une ouverture pour le passage de l'élément faisant saillie (26).

7. Couvercle selon l'une quelconque des revendications précédentes, dans lequel les plaques à crochets (13) sont pourvues de pièces respectives qui se dressent au-dessus de la surface externe du panneau.

8. Couvercle selon la revendication 7, dans lequel le corps rotatif (30, 31) du verrou traverse la pièce dressée de la plaque à crochets respective.

9. Couvercle selon la revendication 7 ou la revendication 8, dans lequel le panneau a deux côtés opposés parallèles et les pièces dressées des plaques à crochets (13) comportent des surfaces cylindriques dont les axes s'étendent parallèlement aux côtés opposés parallèles du panneau.

10. Couvercle selon la revendication 9, dans lequel les évidements (18) comportent des surfaces cylindriques coaxiales aux surfaces cylindriques des pièces dressées des plaques à crochets (13).

11. Couvercle selon l'une quelconque des revendications précédentes, dans lequel les deux éléments de préhension (13, 18) sont agencés à proximité des deux côtés opposés du couvercle.

12. Couvercle selon l'une quelconque des revendications précédentes, dans lequel les moyens pour fixer le couvercle comprennent deux verrous.
